# EUROPEAN PATENT SPECIFICATION

(11) **EP 1 150 931 B1**
(45) Date of publication and mention of the grant of the patent: **21.04.2004**
(21) Application number: 00901323.6
(22) Date of filing: 07.01.2000
(51) Int. Cl.: C04B 28/02, C04B 14/06, C04B 14/02, H05B 3/14

(54) **COMPOSITE ELECTROCONDUCTING MATERIAL**
ELEKTRISCHLEITENDES VERBUNDMATERIAL
CORPS COMPOSITE ELECTROCONDUCTEUR

(30) Priority: 07.01.1999 IT RM990003
(43) Date of publication of application: 07.11.2001
(73) Proprietor: Powerco S.P.A., 72100 Brindisi (IT)
(72) Inventor: MIODUSHEVSKY, Pavel, V., Moscow (RU); RAEVSKAYA, Galina, A., Novosibirsk (RU); RAPIAH, Leonid, N., Novosibirsk (RU)
(74) Representative: Leone, Mario
(86) International application number: PCT/IT2000/000008
(87) International publication number: WO 2000/040519

(56) References cited:
- WO-A-90/14321
- WO-A-96/00197
- US-A- 4 697 063
- PATENT ABSTRACTS OF JAPAN vol. 016, no. 283 (C-0955), 24 June 1992 (1992-06-24) & JP 04 074747 A (DENKI KAGAKU KOGYO KK), 10 March 1992 (1992-03-10)
- PATENT ABSTRACTS OF JAPAN vol. 013, no. 372 (C-627), 17 August 1989 (1989-08-17) & JP 01 126248 A (DENKI KAGAKU KOGYO KK), 18 May 1989 (1989-05-18)

## Description

The present invention relates to a composite electroconducting material, of a type comprising at least one cement-based binder; at least one Carbon-based electroconducting component; and are thermally stable filler.

The present invention further relates to the applications of said material, with particular reference to the uses thereof as electrothermal element in the electrical energy industry, building and civil structure construction industry and agriculture.

Several materials of the above-specified type are known to the art, made of Portland cement and of carbonaceous materials like technical coal, black carbon and the like, characterised by a high particle fragmentation.

However, when heated to high temperatures this type of material suffers a remarkable instability, especially in long term operation.

In fact, the Portland cement components, in particular the hydrated minerals forming the so-called Portland cement clinker, are subject to thermal decay by recrystallization.

Above 120°C, dehydration of sulphate containing phases and hydroaluminate containing phases takes place, up to a complete disintegration thereof, causing a marked instability of the electrical properties of the composite material.

Moreover, the usual carbon-based components, in particular the black carbon that provides the best electrical performances, are subject to oxidation, especially with temperatures higher than 400°C.

This temperature is easily reached at the points of contact between separate carbonaceous particles, where the electrical resistance, and therefore the heat generation, reaches the highest level.

· Thus, the oxidation can irreversibly degrade the material, leading to an increase of the total electrical resistance.

The technical problem underlying the present invention is that of providing a composite electroconducting material allowing to overcome the problems mentioned with reference to the known art.

Such problem is overcome with a material as above-specified characterised in that said binder comprises quick cement; said filler comprises an antiplastic substance; and said electroconducting component comprises colloidal graphite.

The main advantage of the composite electroconducting material according to the present invention lies in its allowing the reaching, and the holding for long term operation times, of temperatures high enough to permit the use thereof as electrothermal element.

The present invention will hereinafter be disclosed according to a preferred embodiment thereof, together with some preferred applications, given by way of example and not for limitative purposes, with reference to the following examples and to the annexed drawings, wherein:
* Figure 1 is a schematic sectional view of a heating element using the composite material according to the invention;
* Figure 2 is a perspective view of a first embodiment of a heating apparatus, incorporating the element of figure 1, applied to centralised heating systems;
* Figure 3 schematically depicts a detail in the apparatus of Figures 2 and 4;
* Figure 4 is a schematic sectional view of a second embodiment of a heating apparatus, applied to localised heating systems;
* Figure 5 is a schematic sectional view of a carpet in a bridge incorporating the apparatus of figure 4;
* Figure 6 is a draft of a detail of the carpet of figure 5;
* Figure 7 is a draft of the detail in figure 6; and
* Figure 8 is a schematic view of a further application of the elements of figure 1.

In its most general form, the composite electroconducting material according to the present invention, commonly recognisable as cement in a specific composition thereof, comprises four main components: a cement-based binder; a Carbon-based electroconducting component; a thermally stable filler; and water, in percentages that will be detailed hereinafter.

Cement of the type commonly known as quick, holding near-constant physical-mechanical characteristics up to temperatures around 1200°C, is provided as binder.

The weight percentage provided for the quick cement is comprised between 34% and 50%.

The composite material of the present invention comprises a antiplastic substance as thermally stable filler, in order to limit the plasticity thereof.

The object of the antiplastic substance is that of binding the free calcium oxide CaO that could form in the cement stone at high temperatures. In absence of this binding effect, the formation of such calcium oxide can cause fracture of the solid material.

In a preferred variant of said material, said antiplastic substance is selected from a group comprising chamotte, i.e., an artificial antiplastic material substantially made of clay, burnt to total dehydration and crushed; diabase; quartz sand; and mixtures thereof.

The weight percentage by provided for the antiplastic substance as thermally stable filler does not exceed 53%.

In particular, the chamotte is specifically effective as CaO binder.

According to a more preferred embodiment of the invention, said composite material comprises a mixture of chamotte and quartz sand, with a reciprocal weight ratio substantially comprised between 0.5 and 2.0 as antiplastic substance.

In particular, said material has a chamotte content not lower than 15% as weight percentage.

Concerning the particle dimensions of the antiplastic substance, they are preferably comprised between 0.1 mm and 2.5 mm.

In particular, chamotte particle having dimensions comprising between 0.1 mm and 2.0 mm, preferably from 0.15 mm to 0.20 mm are provided.

Concerning the electroconducting component, the composite material comprises colloidal graphite.

For colloidal graphite a graphite made of small-sized flakes, apt to be finely dispersed into a mixture is to be understood.

Preferably, said composite electroconducting material comprises a weight percentage of colloidal graphite comprises between 2% and 17%, preferably between 3% and 15%.

In general, said composite electroconducting material is manufactured starting from a mixture comprising percentages weight of the following components, said percentages being comprised between minimum and maximum values:

**Table 1**

| | min | max. |
|---|---|---|
| quick cement | 34% | 50% |
| first filler | 1% | 45% |
| second filler | 1% | 52% |
| colloidal graphite | 2% | 17% |
| water | q.s. to 100% | |

wherein said first filler is an antiplastic substance selected from a group comprising chamotte, diabase and mixtures thereof, and wherein said second filler is quartz sand.

Said percentages are assessed according to the dry weight thereof.

The dry components are mixtured thereamong and mixed for a period of time ranging from 5 to 7 minutes. Then a necessary amount of water is added and the mixture thus obtained is mixed for 3 more minutes.

Using said mixture, an electrothermal element of the type apt to heat when crossed by an electrical current, i.e. when subject to a voltage, can be obtained.

Once obtained, this element can have substantially stable electrical characteristics for long term operations and with temperatures higher than 100°.

The process needed to obtain said element is the following:

A suitable amount of the obtained mixture is cast into a mold. Electric leads, i.e. bare wires, are installed in a predetermined place inside the mold.

Successively the mixture in the mold undergoes to pressing, under a predetermined pressure.

The humid product obtained from this forming step is subjected to hydrothermal treatment, then dried.

The final product useful as heating element of electrothermal type, further has a remarkable thermal capacity, enabling it, to release heat even during blackouts once it is suitably heated.

### Examples

With the above-described manufacture process four different samples, denominated A, B, C and D, were manufactured, characterised by a different composition disclosed in Table 2. The values are expressed in weight percentage.

Said samples were cylinder-shaped, having a length of 50 mm and a diameter of 50 mm.

**Table 2**

| | A | B | C | D |
|---|---|---|---|---|
| Quartz sand | 19.0 | 20.0 | 18.5 | 18.0 |
| Quick cement | 36.0 | 36.0 | 40.5 | 36.0 |
| Chamotte | 29.0 | 20.0 | 30.0 | 30.0 |
| Colloidal graphite | 6.0 | 15.0 | 2.0 | 17.0 |
| Water | 10.0 | 9.0 | 9.0 | 9.0 |

The initial physical-mechanical characteristics of the samples, prior to be subjected to a voltage were tested. The results, the electrical resistance and the mechanical strength thereof, are reported in Table 3.

**Table 3**

| | A | B | C | D |
|---|---|---|---|---|
| Electrical Resistance (Ohm) - Ro | 8.5 | 4.1 | 47 | 2.8 |
| Mechanical Strength | 28.3 | 18.9 | 36.4 | 4.4 |

Such characteristics are substantially comparable to those obtainable from samples prepared according to known compositions, of the types employing Portland cement and black carbon.

Such samples A, B, C, and D underwent a voltage which was variable but such as to initially generate a thermal power Wo equal to 64 W.

Said samples were brought to 150°C by energizing them. Said properties were tested after 100 h, 500 h e 1000 h, in order to simulate different long term operations.

Different voltage values were used in testing, in order to keep the current constant.

Table 4 reports the test results. In particular, the electrical resistance, indicated with R1 after 100 h, R2 after 500 h and with R3 after 1000 h; the electrical powers yielded, indicated with W1, W2 and W3, respectively; the ratio between said yielded resistance R1, R2, R3 and said initial resistance; and the ratio between said yielded powers W1, W2, W3, and the initial electrical power Wo are highlighted for each sample.

**Table 4**

| **After 100 h** | A | B | C | D |
|---|---|---|---|---|
| R1 (Ohm) | 8.8 | 4.2 | 55.5 | 2.83 |
| W1 (Watt) | 62.1 | 62.7 | 54.4 | 63.4 |
| R1/Ro | 1.03 | 1.02 | 1.18 | 1.01 |
| W1/Wo | 0.97 | 0.98 | 0.85 | 0.99 |
| **After 500 h** | A | B | C | D |
| R2 (Ohm) | 8.9 | 4.2 | 58.8 | 2.85 |
| W2 (Watt) | 60.8 | 62.1 | 51.2 | 62.7 |
| R2/Ro | 1.05 | 1.03 | 1.25 | 1.02 |
| W2/Wo | 0.95 | 0.97 | 0.80 | 0.98 |
| **After 1000 h** | A | B | C | D |
| R3 (Ohm) | 9.4 | 4.3 | 62.5 | 2.90 |
| W3 (Watt) | 57.6 | 60.8 | 48 | 60.8 |
| R3/Ro | 1.11 | 1.05 | 1.33 | 1.05 |
| W3/Wo | 0.90 | 0.95 | 0.75 | 0.95 |

The analysis of the test results confirmed that samples having a graphite percentage exceeding the extreme limits of the interval, underwent a change in the relevant physical properties thereof in the range 5-10%.

It is apparent that sample C, having a low graphite content (2%), maintains good mechanical characteristics but also has a high electrical resistance, increasing over time if the sample is kept at a high temperature.

Further, it is apparent that sample D, having a high graphite content (17%), does not have good mechanical characteristics, although it has a good electrical performance.

The samples A, B, C, D evidenced a thermal capacity comparable to that of the traditional red bricks widely used in building.

From the abovedescribed composite material it is possible to manufacture an electrothermal heating element useful in the building sector, the central heating of buildings, agricultural activities, the soil heating permitting horticultural cultivation even on cold terrain (e.g. cold latitudes and/or wintertime), in the wall-localised heating of apartments or of sheds or stables, for heating vast areas where a low temperature of heating element is required for fire prevention.

In order to provide an acceptable safety level, in particular for the electric shocks that may be caused by contact with said composite material, low voltages should be used in the power supply to said heating element.

Moreover, the surfaces of said element can advantageously be coated with one or more layers of insulating varnish, with an insulating layer of composite material deprived of its electroconducting component, with layers of waterproof and insulating material e.g., ceramic plates, polymeric plastics, in particular polyethylene, films, and the like.

These protective layers may be applied singularly or in combination, to satisfy different operating conditions.

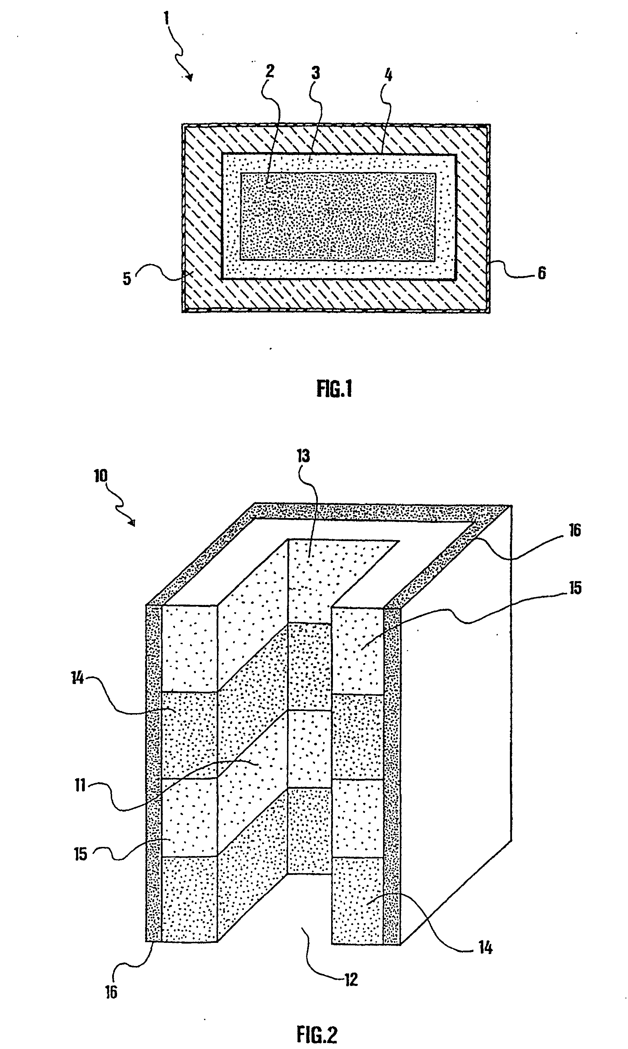

With reference to figure 1, an electrothermal heating element 1 comprising a kernel 2 made of an electro-insulated electroconducting material as hereto described is illustrated.

The kernel 2 has a first inner coating layer, made of said composite material without colloidal graphite, in turn having a second inner coating layer 4, made of insulating varnish.

Furthermore, said element 1 has a first outer coating layer 5 comprising ceramic plates, applied on said second inner layer 4.

Lastly, the element 1 has a second outer layer 6 made of a plastic film, preferably a film of the polymeric type.

With element of the above-specified type, a heating apparatus flowing a thermal carrier, e.g. air apt to be canalised within a centralised heating system of a building, can be implemented.

With reference to figure 2, a heating apparatus of the above-specified type is globally indicated with 10.

It comprises a conduct 11 of the thermal carrier flow, having a inlet section 12 and a outlet section 13.

Said conduct 11 is delimited by walls made of a sequence of heating sectors 14, made of said composite electroconducting material according to the present invention, and by insulating sectors 15, made of, e.g. a common nonconducting cement, the whole of said sectors 14, 15 being supported by a casing 16.

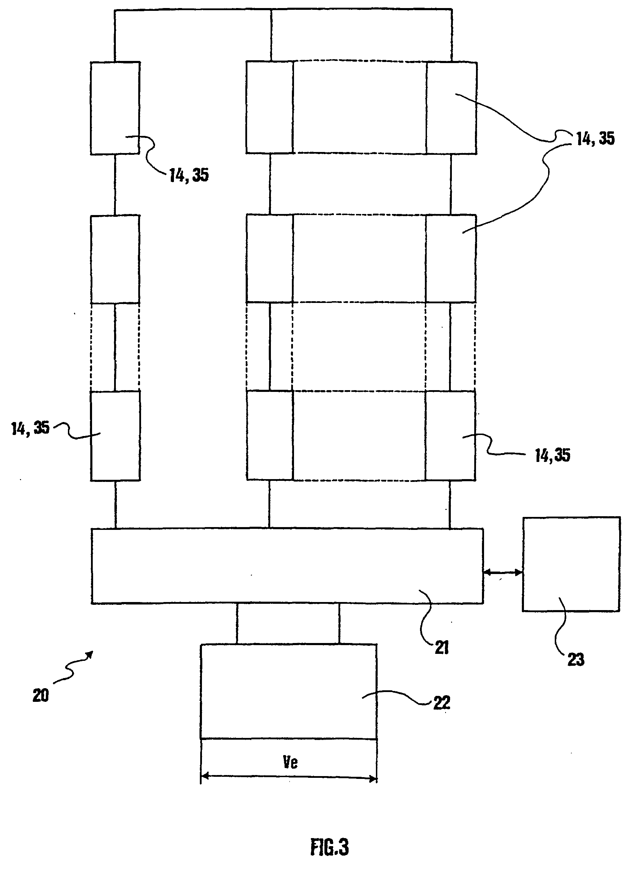

The sectors 14 comprise a plurality of heating element of the aforedescribed type and electrically connected among them. They are suitably power supplied with power supply means schematically showed in the block diagram in figure 3, and globally indicated with 20.

They comprise a multiplexer 21 connected to a power supply 22, providing a supply voltage Ve, and operated by a control unit 23 of the pre-programmed type.

It is apparent from this system how an alternating supply to said sectors 14 is possible, due to the satisfactory individual thermal capacity thereof.

In particular, the heating sectors 14 can be supplied one at the time, e.g. with 1 kW wattage.

The supply time of each sector 14 is determined by the thermal inertia thereof. For instance, said supply time can be of 20-30 seconds.

Therefore, the number of the heating sectors can be selected according to the required thermal power and to the thermal inertia of each sector.

Unlike apparatuses of the known type, comprising heating element concomitantly supplied with a power source (chemical, thermal, etc.), a heating apparatus characterised, by a low power consumption and negligible heat losses thanks to the insulated construction thereof, is implemented.

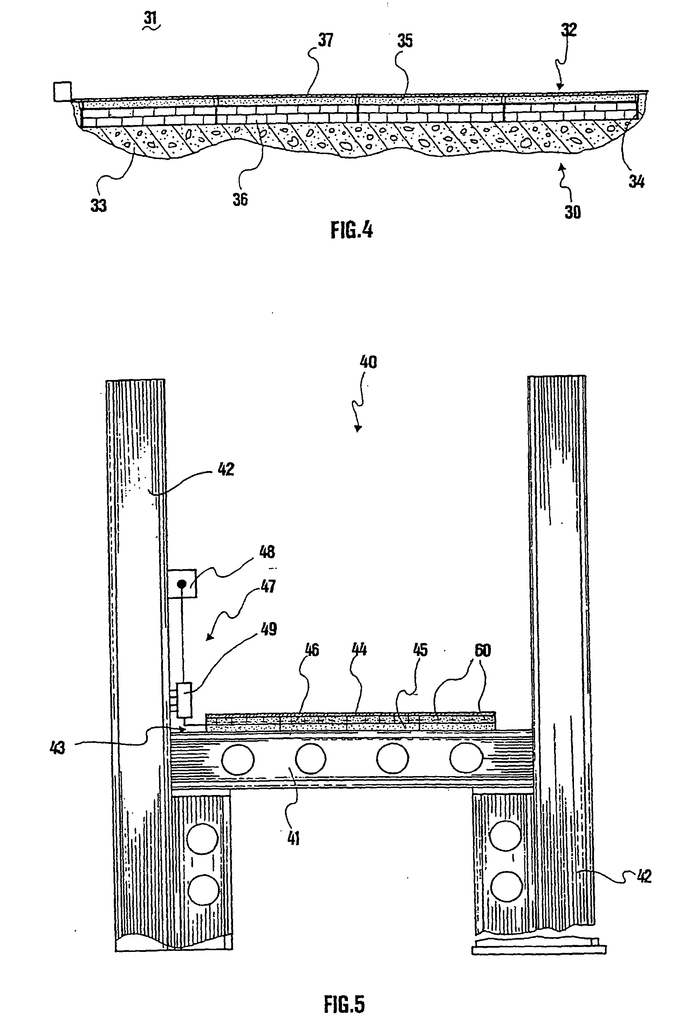

With reference to figure 4, a heating apparatus 30, according to a second preferred embodiment thereof, is used for warming a wall of a room 31, in particular the floor 32 of said room, and it comprises a loose stone foundation structure 33 covered with a supporting structure 34 of heating elements 35, made of the composite material according to the present invention and forming a heating layer divided into heating sectors.

The floor 2 further comprises a thermal insulation 36 between the loose stone foundation 33 and the heating layer. Over the latter, the floor comprises a traditional outer covering 37.

The apparatus 30 can be supplied with the power supply means 20 in figure 3.

Even the heated floor made of said composite material yields remarkable advantages in terms of floor insulation and of lower power consumption.

Said composite material can advantageously be adopted in heating apparatuses of the above-specified type, pre-set for the heating of road carpets subject to ice spots, dangerous for vehicle and pedestrian traffic, under the treadable area thereof.

In particular, an advantageous use turns at to be road carpets of bridges that, being particularly exposed to all weather conditions and having road sections structures with metallic parts apt to form thermal bridges with respect to the site, are especially subject to this problem. Analogous applications can refer to mountain roads, pavements, which are in the shade or somehow exposed to cold, skid pads and so on.

A composite material layer in form of heating plates can be located under a layer subject to traffic, e.g. made of asphalt.

The dimensions and the size of such plates are to be chosen so that they are not subject to the load experienced by the road carpets, but in such a manner that said load is transferred on the supporting structure of the road or bridge.

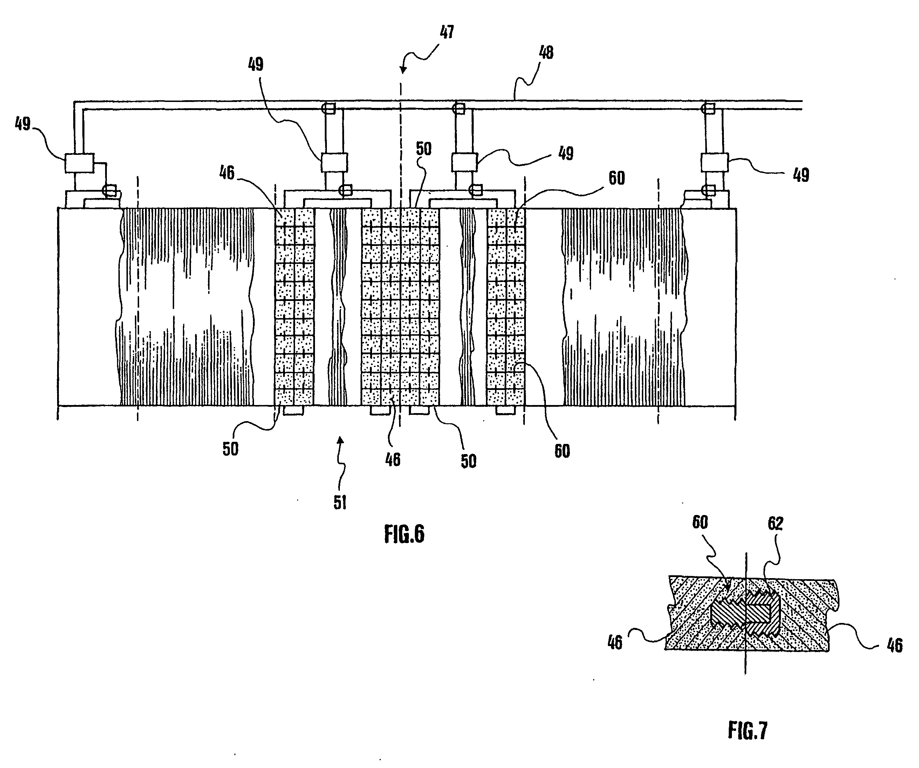

With reference to figure 5, the cross section of a bridge 40 having a central section 41 supported by side piers 42 is schematically shown.

On the central section 41, the bridge 40 comprises a road carpet 43 that has a layer subject to traffic 44 made of common asphalt, having a thickness of about 20 mm.

Furthermore, the road carpets 43 has a supporting layer 45, directly resting on said central section 41, in reinforced concrete plates.

Between the layer 44 and the supporting layer 45, the road carpets 43 comprises a plurality of heating plates 46 as specified above.

The latter are power supplied with power supply means 47 comprising a main electrical line 48 and a power control unit 49 of a type comprising suitable transformers and switches (figure 6).

The plates 46 are sequentially connected therebetween with interconnections 60, represented in figure 7, comprising a male member 61, threaded into the respective plate 46, engaged with a corresponding female member 62, also threaded.

Said plates 46 are sequentially connected, which is divided into subsections 50, each one connected in parallel to organise a power supply section 51, that is connected to said main line.

The control unit is in turn connected to temperature gauges, not shown and of a traditional type, onto the surface and in the plates 46, output a to said group.

Obviously, said plates 46 will be supplied according to weather conditions: in particular the road surface temperature and the wind speed, an increase of the latter entailing an increase in losses of heat by convection.

For instance, in the abovedescribed structural conditions, the plates 46 brought to a 40°C temperature can preserve a asphalt surface temperature of 5°C under a wind speed lower than 10 m/s and an outside temperature not lower than -5°C.

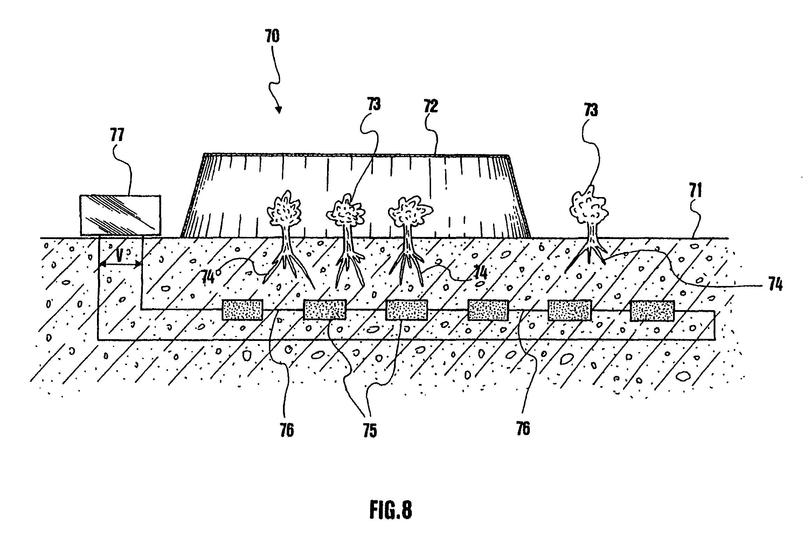

With reference to figure 8, the last preferred application of said composite electroconducting material is described, within a agricultural complex 70 comprising top soil land on which a hothouse structure 72, apt to protect the cultivation 73 having underground roots 74, grown in said top soil 71.

At a depth varying from 0.4 m to 0.5 m, the structure 70 comprises heating plates 75 electrically interconnected (76) and suitably distanced of 0.5 to 1.0 m.

The plates 75 are connected to power supply means 76 analogous to the means 47 in figures 5, 6, 7, comprising power control units and feedback temperature gauges.

A temperature suitable for the survival and growth of the roots of said cultivation can be maintained by means of a appropriate temperature adjustment, permitting the growth thereof even on cold or frozen grounds, common in winter time and/or in northern countries.

Obviously, the plates 75 can either be located in correspondence of hothouse structures or not.

To the above-described composite electroconducting material and to the applications thereof, a person skilled in the art, in order to satisfy further and contingent needs, may effect several further modifications and variants, all however comprised within the protective scope of the pres'ent invention, as defined by the annexed claims.

## Claims

1. A composite electroconducting material comprising at least a cement-based binder; at least one Carbon-based electroconducting component; and at least one thermally stable filler, **characterised in that** said binder comprises quick cement, said filler comprises a **CaO binder** substance and said electroconducting component comprises colloidal graphite.

2. The composite electroconducting material according to claim 1, comprising a weight percentage of quick cement comprised between 34% and 50%.

3. The composite electroconducting material according to claim 1, comprising a weight percentage of colloidal graphite comprised between 2% and 17%, preferably between 3% and 15%.

4. The composite electroconducting material according to claim 1, wherein said CaO binder substance comprises chamotte, diabase, quartz sand or mixtures thereof, in a weight percentage not higher than 53%.

5. The composite electroconducting material according to claim 4, wherein said CaO binder substance comprises a mixture of chamotte and of quartz sand, with a reciprocal ratio comprised between 0.5 and 2.0.

6. The composite electroconducting material according to claim 4 or 5, having a weight percentage of chamotte not lower than 15%.

7. The composite electroconducting material according to any one of the claims from 4 to 6, wherein the chamotte has particles of dimensions comprised between 0.1 mm and 2.0 mm.

8. The composite electroconducting material according to any one of the claims from 4 to 6, wherein the quartz sand has particles of dimensions comprised between 0.1 mm and 2.5 mm.

9. The composite electroconducting material according to claim 7, wherein the chamotte particles have dimensions comprised between 0.15 mm and 0.20 mm.

10. The composite electroconducting material according to claim 1, manufactured from a mixture comprising weight percentages of the following components, said percentages being comprised within the maximum and minimum values:
| | min | max. |
|---|---|---|
| quick cement | 34% | 50% |
| first filler | 1% | 45% |
| second filler | 1% | 52% |
| colloidal graphite | 2% | 17% |
| water | q.s. to 100% | |
wherein said first filler is a CaO binder substance selected from a group comprising chamotte, diabase and mixtures thereof, with particles having dimensions comprised between 0.15 mm and 0,.20 mm, and said second filler is quartz sand.

11. A heating element (1) comprising a kernel (2) made of an electro-insulated electroconducting material according to any one of the claims from 1 to 10, provided with wires.

12. The heating element (1) according to claim 11, wherein said kernel (2) comprises at least one coating layer (3, 4, 5, 6).

13. The heating element (1) according to claim 12, wherein said at least one coating layer is electro-insulating.

14. The heating element (1) according to claim 12 or 13, wherein said at least one coating layer is waterproof.

15. The heating element (1) according to claim 14, wherein said at least one coating layer is made of a material selected from a group comprising: the composite electroconducting material which is deprived of said at least one Carbon-based electroconducting component; insulating varnish; ceramic; plastics, particularly polymeric plastics, film.

16. A heating apparatus (10; 30) comprising a sequence of heating sectors (14; 35) made of an insulating electroconducting material according to any one of the claims from 1 to 10.

17. The heating apparatus (10; 30) according to claim 16, wherein said heating sectors (14; 35) comprise a plurality of electrically interconnected heating element, supplied by power supply means (20).

18. The heating apparatus (10; 30) according to claim 17, wherein said power supply means (20) comprise a multiplexer (21) connected to a power supply (22), providing a supply voltage (Ve), and separated by a control unit (23) that implements an alternate power supply of said sectors (14; 35).

19. A road carpet (43), comprising a plurality of heating plates (46) made of an insulating electroconducting material according to any one of the claims from 1 to 10, electrically interconnected and power supplied through power supply means (47), located between a treadable layer (44) and a supporting layer (45).

20. The road carpet (43) according to claim 19, wherein said heating plates (46) are connected in sequence, divided into subsections (50) each one connected in parallel to form a power supplied section (51), connected to a main electrical line (48) of said power supply means (47) having, for each power supplied section (51), a control unit (49) in turn linked to temperature gauges onto the treadable surface (44) and in the heating plates (46), which output a feedback signal to said group (49).

21. An agricultural structure (70) comprising a plurality of heating plates (75) made of an insulating electroconducting material according to any one of the claims from 1 to 10, located in a top soil (71).

22. The agricultural structure (70) according to claim 21, wherein said heating plates (75) are located at a depth comprised between 0.4 m and 0. 5 m and suitably distanced therebetween of 0.5 - 1.0 m, said heating plates (75) being connected to power supply means (76) comprising control units and feedback temperature gauges.

## Patentansprüche

1. Elektrischleitendes Verbundmaterial, das wenigstens einen zementbasierten Binder, wenigstens einen kohlenstoffbasierten elektrischleitenden Bestandteil und wenigstens einen thermisch beständigen Füller umfasst, **dadurch gekennzeichnet, dass** der Binder Schnellzement umfasst, der Füller eine CaO-Bindersubstanz umfasst und der elektrischleitende Bestandteil Kolloidgraphit umfasst.

2. Elektrischleitendes Verbundmaterial nach Anspruch 1, einen Massenanteil an Schnellzement zwischen 34 % und 50 % umfassend.

3. Elektrischleitendes Verbundmaterial nach Anspruch 1, einen Massenanteil an Kolloidgraphit zwischen 2 % und 17 %, vorzugsweise zwischen 3 % und 15 %, umfassend.

4. Elektrischleitendes Verbundmaterial nach Anspruch 1, wobei die CaO-Bindersubstanz Schamotte, Diabas, Quarzsand oder Gemische davon mit einem Massenanteil von nicht mehr als 53 % umfasst.

5. Elektrischleitendes Verbundmaterial nach Anspruch 4, wobei die CaO-Bindersubstanz ein Gemisch von Schamotte und von Quarzsand in einem umgekehrten Verhältnis zwischen 0,5 und 2,0 umfasst.

6. Elektrischleitendes Verbundmaterial nach Anspruch 4 oder 5, einen Massenanteil an Schamotte nicht unter 15 % aufweisend.

7. Elektrischleitendes Verbundmaterial nach einem der Ansprüche 4 bis 6, wobei die Schamotte Teilchen mit Abmessungen zwischen 0,1 mm und 2,0 mm aufweist.

8. Elektrischleitendes Verbundmaterial nach einem der Ansprüche 4 bis 6, wobei der Quarzsand Teilchen mit Abmessungen zwischen 0,1 mm und 2,5 mm aufweist.

9. Elektrischleitendes Verbundmaterial nach Anspruch 7, wobei die Schamotteteilchen Abmessungen zwischen 0,15 mm und 0,20 mm aufweisen.

10. Elektrischleitendes Verbundmaterial nach Anspruch 1, hergestellt aus einem Gemisch, das Massenanteile der folgenden Bestandteile umfasst, wobei die Anteile zwischen den folgenden Höchst-und Mindestwerten liegen:
| | Mindestens | Höchstens |
|---|---|---|
| Schnellzement | 34 % | 50 % |
| Erster Füller | 1 % | 45 % |
| Zweiter Füller | 1 % | 52 % |
| Kolloidgraphit | 2 % | 17 % |
| Wasser | q. s. bis 100 % | |
wobei der erste Füller eine CaO-Bindersubstanz ist, die aus einer Gruppe gewählt wurde, die Schamotte, Diabas und Gemische davon umfasst, wobei die Teilchen Abmessungen zwischen 0,15 mm und 0,20 mm aufweisen und der zweite Füller Quarzsand ist.

11. Heizelement (1), einen Kern (2) umfassend, der aus einem elektrischisolierten elektrischleitenden Material nach einem der Ansprüche 1 bis 10 hergestellt ist, ausgestattet mit Drähten.

12. Heizelement (1) nach Anspruch 11, wobei der Kern (2) wenigstens eine Deckschicht (3, 4, 5, 6) umfasst.

13. Heizelement (1) nach Anspruch 12, wobei die wenigstens eine Deckschicht elektrischisolierend ist.

14. Heizelement (1) nach Anspruch 12 oder 13, wobei die wenigstens eine Deckschicht wasserfest ist.

15. Heizelement (1) nach Anspruch 14, wobei die wenigstens eine Deckschicht aus einem Material hergestellt ist, das aus einer Gruppe gewählt ist, die Folgendes umfasst: das elektrischleitende Verbundmaterial, das von dem wenigstens einen kohlenstoffbasierten elektrischleitenden Bestandteil befreit ist; Isolierlack; Keramik; Kunststoff, insbesondere polymere Kunststoffe, Film.

16. Heizvorrichtung (10, 30), eine Sequenz von Heizsektoren (14, 35) umfassend, die aus einem isolierenden elektrischleitenden Material nach einem der Ansprüche 1 bis 10 hergestellt sind.

17. Heizvorrichtung (10, 30) nach Anspruch 16, wobei die Heizsektoren (14, 35) eine Vielzahl von elektrisch miteinander verbundenen Heizelementen umfassen, die durch Stromversorgungseinrichtungen (20) versorgt werden.

18. Heizvorrichtung (10, 30) nach Anspruch 17, wobei die Stromversorgungseinrichtungen (20) einen Multiplexer (21) umfassen, der an eine Stromversorgung (22), die eine Versorgungsspannung (Ve) bereitstellt, angeschlossen ist und durch eine Steuereinheit (23), die eine Wechselstromversorgung der Sektoren (14, 35) implementiert, getrennt ist.

19. Straßendecke (43), die eine Vielzahl von Heizplatten (46) umfasst, die aus einem isolierenden elektrischleitenden Material nach einem der Ansprüche 1 bis 10 hergestellt sind, durch Stromversorgungseinrichtungen (47) elektrisch miteinander verbunden und mit Strom versorgt werden und sich zwischen einer begehbaren Schicht (44) und einer tragenden Schicht (45) befinden.

20. Straßendecke (43) nach Anspruch 19, wobei die Heizplatten (46)
- in Reihe verbunden sind;
- in Unterabschnitte (50) unterteilt sind, von denen jeder parallel verbunden ist, um einen stromversorgten Abschnitt (51) zu bilden, der an eine elektrische Hauptleitung (48) der Stromversorgungseinrichtung (47) angeschlossen ist, die für jeden stromversorgten Abschnitt (51) eine Steuereinheit (49) aufweist, die wiederum mit Temperaturmessvorrichtungen auf der begehbaren Fläche (44) und in den Heizplatten (46) verbunden ist, die ein Rückkopplungssignal an die Gruppe (49) ausgeben.

21. Landwirtschaftliche Struktur (70), die eine Vielzahl von Heizplatten (75) umfasst, die aus einem isolierenden elektrischleitenden Material nach einem der Ansprüche 1 bis 10 hergestellt sind und sich in einem Mutterboden (71) befinden.

22. Landwirtschaftliche Struktur (70) nach Anspruch 21, wobei sich die Heizplatten (75) in einer Tiefe zwischen 0,4 und 0,5 m befinden und dort dazwischen in geeignetem Abstand von 0,5 bis 1,0 m angeordnet sind, wobei die Heizplatten (75) mit Stromversorgungseinrichtungen (76) verbunden sind, die Steuereinheiten und Rückkopplungs-Temperaturmessvorrichtungen umfassen.

## Revendications

1. Matériau électro-conducteur composite comportant au moins un liant à base de ciment, au moins un composant électro-conducteur à base de carbone, et au moins une charge thermiquement stable, **caractérisé en ce que** ledit liant comporte un ciment à prise rapide, ladite charge comporte une substance liante de CaO et ledit composant électro-conducteur comporte un graphite colloïdal.

2. Matériau électro-conducteur composite selon la revendication 1, comportant un pourcentage en poids de ciment à prise rapide compris entre 34 % et 50 %.

3. Matériau électro-conducteur composite selon la revendication 1, comportant un pourcentage en poids de graphite colloïdal compris entre 2 % et 17 %, de préférence entre 3 % et 15 %.

4. Matériau électro-conducteur composite selon la revendication 1, dans lequel ladite substance liante de CaO comporte une chamotte, une diabase, du sable quartzeux ou des mélanges de ceux-ci, selon un pourcentage en poids qui n'est pas supérieur à 53 %.

5. Matériau électro-conducteur composite selon la revendication 4, dans lequel ladite substance liante de CaO comporte un mélange de chamotte et de sable quartzeux, avec un rapport réciproque compris entre 0,5 et 2,0.

6. Matériau électro-conducteur composite selon la revendication 4 ou 5, ayant un pourcentage en poids de chamotte qui n'est pas inférieur à 15%.

7. Matériau électro-conducteur composite selon l'une quelconque des revendications 4 à 6, dans lequel la chamotte a des particules de dimensions comprises entre 0,1 mm et 2,0 mm.

8. Matériau électro-conducteur composite selon l'une quelconque des revendications 4 à 6, dans lequel le sable quartzeux a des particules de dimensions comprises entre 0,1 mm et 2,5 mm.

9. Matériau électro-conducteur composite selon la revendication 7, dans lequel les particules de chamotte ont des dimensions comprises entre 0,15 mm et 0,20 mm.

10. Matériau électro-conducteur composite selon la revendication 1, fabriqué à partir d'un mélange comportant des pourcentages en poids des composants suivants, lesdits pourcentages étant compris entre des valeurs maximum et minimum :
| | minimum | maximum |
|---|---|---|
| ciment à prise rapide | 34 % | 50 % |
| première charge | 1 % | 45 % |
| seconde charge | 1 % | 52 % |
| graphite colloïdal | 2 % | 17 % |
| eau | q. s. jusqu'à 100 % | |
dans lequel ladite première charge est une substance liante de CaO sélectionnée parmi un groupe comportant la chamotte, la diabase et des mélanges de celles-ci, avec des particules ayant des dimensions comprises entre 0,15 mm et 0,20 mm, et ladite seconde charge est du sable quartzeux.

11. Elément chauffant (1) comportant un noyau (2) constitué d'un matériau électro-conducteur électro-isolé selon l'une quelconque des revendications 1 à 10, muni de fils.

12. Elément chauffant (1) selon la revendication 11, dans lequel ledit noyau (2) comporte au moins une couche de revêtement (3, 4, 5, 6).

13. Elément chauffant (1) selon la revendication 12, dans lequel ladite au moins une couche de revêtement est électro-isolante.

14. Elément chauffant (1) selon la revendication 12 ou 13, dans lequel ladite au moins une couche de revêtement est étanche à l'eau.

15. Elément chauffant (1) selon la revendication 14, dans lequel ladite au moins une couche de revêtement est constituée d'un matériau sélectionné parmi un groupe comportant : le matériau électro-conducteur composite qui est privé dudit au moins un composant électro-conducteur à base de carbone, un vernis isolant, une céramique, des matières plastiques, en particulier des matières plastiques polymères, un film.

16. Dispositif chauffant (10 ; 30) comportant une série de secteurs chauffants (14 ; 35) constitués d'un matériau électro-conducteur isolant selon l'une quelconque des revendications 1 à 10.

17. Dispositif chauffant (10 ; 30) selon la revendication 16, dans lequel lesdits secteurs chauffants (14 ; 35) comportent une pluralité d'éléments chauffants interconnectés électriquement, alimentés par des moyens d'alimentation en énergie (20).

18. Dispositif chauffant (10 ; 30) selon la revendication 17, dans lequel lesdits moyens d'alimentation en énergie (20) comportent un multiplexeur (21) connecté à une alimentation en énergie (22), délivrant une tension d'alimentation (Ve), et séparé par une unité de commande (23) qui implémente une alimentation en énergie alternée desdits secteurs (14 ; 35).

19. Revêtement routier (43), comportant une pluralité de plaques chauffantes (43) constituées d'un matériau électro-conducteur isolant selon l'une quelconque des revendications 1 à 10, interconnectées électriquement et alimentées en énergie par l'intermédiaire de moyens d'alimentation en énergie (47), positionnés entre une couche de roulement (44) et une couche de support (45).

20. Revêtement routier (43) selon la revendication 19, dans lequel lesdites plaques chauffantes (46) sont connectées en série, divisées en sous-sections (50) chacune connectée en parallèle pour former une section alimentée en énergie (51), connectées à une ligne électrique principale (48) desdits moyens d'alimentation en énergie (47) ayant, pour chaque section alimentée en énergie (51) une unité de commande (49) à son tour reliée à des jauges de température sur la surface de roulement (44) et dans les plaques chauffantes (46), qui émettent un signal de rétroaction vers ledit groupe (49).

21. Structure agricole (70) comportant une pluralité de plaques chauffantes (75) constituées d'un matériau électro-conducteur isolant selon l'une quelconque des revendications 1 à 10, situées sur une terre végétale (71).

22. Structure agricole (70) selon la revendication 21, dans laquelle lesdites plaques chauffantes (75) sont positionnées à une profondeur comprise entre 0,4 m et 0,5 m et espacées de manière adaptée de 0,5 à 1,0 m, lesdites plaques chauffantes (75) étant connectées à des moyens d'alimentation en énergie (76) comportant des unités de commande et des jauges de température de rétroaction.
